(19) **Europäisches Patentamt**
**European Patent Office**
**Office européen des brevets**

(11) **EP 1 338 329 B1**

(12) # EUROPÄISCHE PATENTSCHRIFT

(45) Veröffentlichungstag und Bekanntmachung des Hinweises auf die Patenterteilung:
**26.09.2007 Patentblatt 2007/39**

(51) Int Cl.:
*B01D 67/00* (2006.01)  *B01D 69/02* (2006.01)
*B26F 1/31* (2006.01)  *C08J 9/26* (2006.01)

(21) Anmeldenummer: **02028109.3**

(22) Anmeldetag: **17.12.2002**

(54) **Verfahren zur Herstellung von Nanostrukturen in Membranen und asymmetrische Membran**

Process for making nanostructures in membranes and asymmetric membranes

Procédé de fabrication de nanostructures dans des membranes et membranes asymétriques

(84) Benannte Vertragsstaaten:
**AT BE BG CH CY CZ DE DK EE ES FI FR GB GR IE IT LI LU MC NL PT SE SI SK TR**

(30) Priorität: **26.02.2002 DE 10208023**

(43) Veröffentlichungstag der Anmeldung:
**27.08.2003 Patentblatt 2003/35**

(73) Patentinhaber: **Gesellschaft für Schwerionenforschung mbH 64291 Darmstadt (DE)**

(72) Erfinder:
• **Siwy, Zuzanna, Dr.**
  **64291 Darmstadt (DE)**
• **Dobrev, Dobri D., Dr.**
  **64291 Darmstadt (DE)**
• **Neumann, Reinhard, Prof.**
  **64291 Darmstadt (DE)**
• **Trautmann, Christina, Dr.**
  **64291 Darmstadt (DE)**
• **Voss, Kai**
  **64291 Darmstadt (DE)**

(74) Vertreter: **Boeters, Hans Dietrich et al BOETERS & LIECK Oberanger 32 80331 München (DE)**

(56) Entgegenhaltungen:
DE-A- 3 816 078    DE-C- 4 210 486
US-A- 3 770 532

• APEL P Y ET AL: "Diode-like single-ion track membrane prepared by electro-stopping" NUCLEAR INSTRUMENTS & METHODS IN PHYSICS RESEARCH, SECTION - B: BEAM INTERACTIONS WITH MATERIALS AND ATOMS, NORTH-HOLLAND PUBLISHING COMPANY. AMSTERDAM, NL, Bd. 184, Nr. 3, November 2001 (2001-11), Seiten 337-346, XP004310727 ISSN: 0168-583X
• TRAUTMANN C ET AL: "Pore geometry of etched ion tracks in polyimide" NUCLEAR INSTRUMENTS & METHODS IN PHYSICS RESEARCH, SECTION - B: BEAM INTERACTIONS WITH MATERIALS AND ATOMS, NORTH-HOLLAND PUBLISHING COMPANY. AMSTERDAM, NL, Bd. 111, Nr. 1, 1. April 1996 (1996-04-01), Seiten 70-74, XP004007339 ISSN: 0168-583X
• KLINTBERG L ET AL: "Sodium hypochlorite as a developer for heavy ion tracks in polyimide" NUCLEAR INSTRUMENTS & METHODS IN PHYSICS RESEARCH, SECTION - B: BEAM INTERACTIONS WITH MATERIALS AND ATOMS, NORTH-HOLLAND PUBLISHING COMPANY. AMSTERDAM, NL, Bd. 184, Nr. 4, Dezember 2001 (2001-12), Seiten 536-543, XP004313112 ISSN: 0168-583X
• VILENSKY A I ET AL: "POLYIMIDE TRACK MEMBRANES FOR ULTRAFILTRATION AND MICROFILTRATION" POLYMER SCIENCE, INTERPERIODICA, BIRMINGHAM, AL, US, Bd. 36, Nr. 3, 1. März 1994 (1994-03-01), Seiten 391-400, XP000434424 ISSN: 0965-545X
• BAUR D ET AL: "RELEVANCE OF SURFACE GELS FOR ION TRACK ETCHING IN POLYMERS" GSI JAHRESBERICHT, XX, XX, 2001, Seite COMPLETE XP008012604

**EP 1 338 329 B1**

- APEL P Y ET AL: "Morphology of latent and etched heavy ion tracks in radiation resistant polymers polyimide and poly(ethylene naphthalate)" NUCLEAR INSTRUMENTS & METHODS IN PHYSICS RESEARCH, SECTION - B: BEAM INTERACTIONS WITH MATERIALS AND ATOMS, NORTH-HOLLAND PUBLISHING COMPANY. AMSTERDAM, NL, Bd. 185, Nr. 1-4, Dezember 2001 (2001-12), Seiten 216-221, XP004326838 ISSN: 0168-583X

**Beschreibung**

Die vorliegende Erfindung betrifft ein Verfahren zur Herstellung von Nanostrukturen in Membranen, bei dem eine Membran aus einem Polymermaterial mit geladenen Teilchen, insbesondere Ionen, zur Erzeugung von Teilchenspuren bestrahlt wird, die Teilchenspuren unter Verwendung einer Ätzflüssigkeit geätzt werden und der Ätzvorgang unter Verwendung einer Stoppflüssigkeit gestoppt wird, derart, daß asymmetrische Strukturen gebildet werden.

Der Einsatz von porösen Membranen ist ein technologischer Bereich, der zunehmend an Bedeutung gewinnt. Zur Herstellung poröser Membranen werden diese mit energetischen Teilchen bestrahlt und anschließend chemisch geätzt, wobei Porenkanäle erzeugt werden. Die Poren können einen Durchmesser zwischen einigen 10 nm und im Mikrometerbereich aufweisen und sind sehr homogen. Bei Poren mit Durchmessern im nm-Bereich ergibt sich eine Anwendungsbeschränkung aus dem Grunde, daß der Massentransport durch die kleinen Poren ungünstig ist. Polyethyleneterephthalat (PET) wird vielfach eingesetzt. Ein Verfahren zum Ätzen von Ionenspuren in PET-Membranen ist in P. Apel, Y.E. Korchev, Z. Siwy, R. Spohr, M. Yoshida, Diode-like single-ion track membrane prepared by electro-stopping, Nucl. Instrum. Meth. B 184, 337 (2001) beschrieben.

Es hat sich jedoch gezeigt, daß ein Ionenstrom durch Nanoporen kein stabiles Signal ergibt, sondern stark schwankt, wobei die Schwankungsamplituden sogar 100 % des Signals erreichen können. Die kleinen Poren mit Durchmessern von etwa 2 nm neigen dazu, sich zu schließen. Dies ergibt sich aus der chemischen Eigenschaft derartiger Materialien und den Prinzipien der Spurenätztechnik. Als ein Grund wird angesehen, daß nach Bestrahlung mit schweren Ionen und anschließendem chemischen Ätzen zerbrochene Teile von Polymerketten, sogenannte lose Enden ("dangling ends") erzeugt werden, die sich auf zufällige Weise gemäß der Theorie von in Lösung befindlichen Polymeren fortlaufend bewegen, sogar ohne Anlegen eines elektrischen Feldes. Auch scheinen sie zur Bildung einer Gelschicht beizutragen, die den Transport durch die Poren sogar noch undefinierter macht (Schmidt-Rohr, K., Hu, W. & Zumdulyadis, N., Elucidation of the Chain Conformation in a Glassy Polyester, PET, by Two-Dimensional NMR, Science, 280, 714-717 (1998) ; D. Baur, Y. Korchev, C. Müller, Z. Siwy, H. Spohr, R. Spohr, Surface gel in ion track etching - Observation and consequences, GSI Jahresbericht, 2001).

Ein weiteres Problem, das beim Transport durch poröse Membranen auftritt, ist deren Dicke. Diese beeinflußt die gemessene Strömung, z.B. den Ionenstrom, stark. Zur Lösung wurden konische Poren in PET entwickelt. Diese haben jedoch einen kleinen Öffnungswinkel von einigen Grad (lediglich bis zu vier Grad), was zu keiner ausreichenden Vergrößerung des Ionenstroms führt (P. Apel, Y.E. Korchev, Z. Siwy, R. Spohr, M. Yoshida, a.a.O.). Asymmetrische Poren in PET ergeben kein zeitstabiles Ionenstromsignal.

Es ist bereits das Polyimid Kapton® für Teilchenspurmembranen in verschiedenen Bereichen eingesetzt worden. Die Auswahl dieses Polyimids ist wegen seiner ausgezeichneten mechanischen und elektrischen Beständigkeit in einem weiten Temperaturbereich erfolgt. Diese Eigenschaften ergeben sich aus der chemischen Struktur des Polymers, die hauptsächlich auf aromatischen Ringen beruht. Bei der Verwendung von Kapton hat es sich als wichtig herausgestellt, den pH-Wert des Ätzmittels genau zu steuern, so daß sich eine zweckmäßige Porengrößenverteilung ergibt (Trautmann, C., Bruechle, W., Spohr, R., Vetter J. und Angert, N., Pore geometry of etched ion tracks in polyimide, Nucl. Instrum. Meth. B, 111 (1996) 70-74).

Der Erfindung liegt die Aufgabe zugrunde, eine poröse Membran zu schaffen, die einen stabilen Massentransport, insbesondere von Ionen ermöglicht, somit ein stabiles Signal liefert und ein schnelles Ansprechverhalten aufweist.

Diese Aufgabe ist bei einem Herstellungsverfahren mit den Merkmalen des Anspruch 1 und einer Membran mit den Merkmalen des Anspruchs 5 gelöst. Vorteilhafte Weiterbildungen und Varianten sind Gegenstand der abhängigen Ansprüche.

Das Verfahren zur Herstellung von Nanostrukturen in Membranen gemäß der Erfindung umfaßt somit, daß eine Membran aus einem Polymermaterial mit geladenen Teilchen, insbesondere Ionen, zur Erzeugung von Teilchenspuren bestrahlt wird, die Teilchenspuren der Membran unter Verwendung einer Ätzflüssigkeit geätzt werden und der Ätzvorgang nach dem Erreichen des Durchbruchzeitpunktes unter Verwendung einer Stoppflüssigkeit sofort gestoppt wird, derart, daß als Nanostrukturen stark asymmetrische Poren mit glatten Wänden und sehr scharfen Konusspitzen gebildet werden. Als Membranmaterial wird Polyimid verwendet.

Das erfindungsgemäße Verfahren zeichnet sich durch die Wahl der Spurenätztechnik und des Polymermaterials aus, um asymmetrische Poren zu erzeugen.

Als Membranmaterial ist ein Polyimid ausgewählt worden, und zwar vorzugsweise Kapton® vom Typ H, das von DuPont geliefert wird. Die chemische Struktur des Membranmaterials stellt die Glattheit der Porenwände sicher, wobei das Aufbrechen der Kapton-Polymerketten und das Ätzen zur Bildung von Carboxyl-Gruppen führen, die am aromatischen Ring sitzen. Dabei bleibt die Gesamtstruktur jedoch steif.

Die Geometrie der Ätzspuren ist bestimmt durch zwei Ätzvorgänge, einen, der entlang der Ionenspur auftritt, und einen durch das Ätzen des Materials selbst, somit die Spurätzrate und die Materialätzrate. Das Verhältnis dieser Ätzraten bestimmt wiederum den Öffnungswinkel der resultierenden Poren. Der pH-Wert hat einen Einfluß auf insbesondere die Materialätzrate. Diese ist bei Kapton® hoch, was zu einem größeren Öffnungswinkel führt (siehe DE 42 10 486 C1).

Bei der Herstellung der asymmetrischen Poren bei einer porösen Membran gemäß der Erfindung ist es sehr wichtig, daß die Poren eine sehr scharfe Konusspitze aufweisen. Es ist daher notwendig, nach dem Erreichen des Durchbruchzeitpunktes den Ätzvorgang sofort zu stoppen. Wird NaOCl als Ätzmittel verwendet, bei dem die OCl$^-$-Ionen als Wirkmittel verwendet werden, müssen Stopplösungen vom Redox-Typ verwendet werden. Bei einer vorteilhaften Verfahrensvariante wird daher eine 1 M-Lösung Kaliumiodid verwendet, was zum Zeitpunkt des Durchbruchs die folgende chemische Reaktion herbeiführt:

$$OCl^- + 2H^+ + 2I^- \rightarrow I_2 + Cl^- + H_2O$$

Aufgrund der Gegenwart von $I_2$ wird die Lösung gelb, was zusätzlich eine farbliche Kontrolle der Reaktion liefert. Es können auch andere Reduziermittel statt des Ions I$^-$ verwendet werden, z.B. $NO_2^-$, $S_2O_3^{2-}$, $Mn^{2-}$.

Die asymmetrische Form der Poren, die Ladungen auf die Wände übertragen, stellt die Spannungsempfindlichkeit der Pore aufgrund der Asymmetrie des elektrischen Feldes an beiden Eintritten sicher. Die Pore richtet somit den Ionenstrom gleich.

Durch die stark asymmetrischen Nanoporen der erfindungsgemäßen porösen Membran ergeben sich glatte Wände und sehr scharfe (nm-Durchmesser) Konusspitzen.

Die Erfindung wird im folgenden anhand eines Ausführungsbeispiels und der Zeichnung erläutert. In der Zeichnung zeigen:

Fig. 1    den Stromverlauf während des Ätzvorgangs, wobei der Zeitpunkt des Durchbruchs mit einem Pfeil gekennzeichnet ist,

Fig. 2    a) bis c) den Ablauf des asymmetrischen Ätzens zur Herstellung von Poren mit Doppelkonus,

Fig. 3    die Strom-Spannungs-Eigenasymmetrie einer Schaltmembran mit einer einzigen konischen Pore in symmetrischer pH- und Konzentrationsumgebung,

Fig. 4    eine Veranschaulichung der Glattheit der Probe nach ausgeführten Ätzvorgang,

Fig. 5    eine Ansicht einer vergrößerten Pore der Folge von Figur 4 und

Fig. 6    eine Vergleichsdarstellung der Strom-Zeit-Kennlinie einer asymmetrischen Nanopore in PET und in Kapton.

Es wird im folgenden ein Beispiel für die Herstellung einer elektrisch schaltbaren, einporigen Membran beschrieben. Eine Kreisscheibe mit 12 $\mu$m Dicke und 30 mm Durchmesser aus Polyimid (Kapton® H, DuPont) wurde im Zentrum mit 11,4 MeV/Nukleon Uran-Ionen spezifischer Energie bestrahlt und von einer Seite her in NaOCl (pH 12,5, 13 % aktiver Chloranteil) bei 50°C geätzt. Zu diesem Zweck wurde die Membran in eine elektrolytische Zelle eingebracht, die aus zwei Zellhälften aus natronlaugen-beständigem Kel-F® (Handelsname = Polychlorotrifluoroethylene, CClF$_3$) besteht und durch Aufbringen von Druck auf die beiden Zellhälften hermetisch verschlossen ist (vgl. P. Apel, Y.E. Korchev, Z. Siwy, R. Spohr, M. Yoshida, a.O.).

Während des Ätzvorgangs war jede Zellhälfte mit einer Platinelektrode und während der Messung der elektrischen Strom-Spannungs-Kennlinie mit einer Silber/Silberchloridelektrode versehen. Eine Zellhälfte enthielt das Ätzmittel und die andere Zellhälfte das Stoppmittel. Über die Membran wurde eine Potentialdifferenz aufgebracht. Eine Potentialdifferenz von 1 V ermöglicht eine rasche Bestimmung des Durchbruchstroms und führt nicht zu einem elektrischen Zusammenbruch der Polymerfolie. Das Stoppmittel war eine wässrige 1 M KI-Lösung. Der elektrische Strom durch die Membran wurde während des Ätzvorgangs geregelt. Nach dem Durchbruch wurde die Stopplösung aufgrund der Bildung von $I_2$ gelb. Wenn ein vorher festgelegter Wert des gemessenen Stroms überschritten wurde, wurde der Ätzvorgang durch Auswaschen des Ätzmittels mit Wasser und KI unterbrochen.

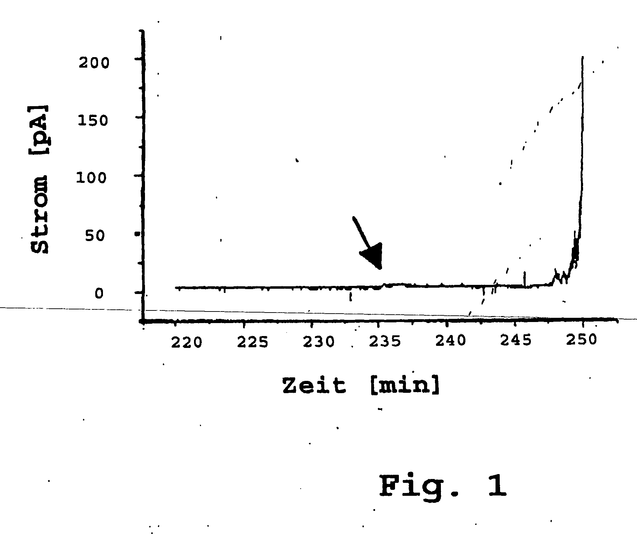

Dieser Prozeß führte zu einer mechanisch festen, dauerhaften Membran mit asymmetrischer Pore mit einer engen Öffnung im Nanometerbereich. Fig. 1 veranschaulicht den aufgezeichneten Durchbruchstrom. Der Augenblick des Durchbruchs ist zu erkennen an der Erhöhung des Stroms (siehe Pfeil). Um eine Entwicklung der Pore beobachten zu können, wurde die Probe länger geätzt.

Durch Rasterelektronenmikroskopie (bei Verwendung von Proben von $10^6$ Poren/cm$^2$) wurde der Durchmesser der großen Öffnung der Pore gefunden. Die Materialätzrate, die im Leitfähigkeitsmeßgefäß bei 50°C gemessen wurde, war gleich 0,004 $\mu$m/Min. Nach 4,5 Stunden, die im Mittel zum Ätzen einer Kapton®-Folie von 12 $\mu$m benötigt wurden, hatte die große Öffnung einen Durchmesser von etwa 2 $\mu$m.

Der Durchmesser der kleinen Öffnung wurde auf der Basis von Strommessungen unter Verwendung der Standard-KCl-Lösung geätzt. Bei Annahme einer idealen Konusform der sich ergebenden Pore wurde ihre Leitfähigkeit G mit den Porenöffnungen D, d durch die folgende Relation verknüpft:

$$G \ = \ I/U \ = \ \pi \cdot D \cdot d \cdot \kappa / 4 \cdot L,$$

daher

$$d \ = \ 4 \cdot L \cdot I / \pi \cdot D \cdot \kappa \cdot U,$$

wobei L die Länge der Pore, $\kappa$ die Leitfähigkeit des Elektrolyten, U die angelegte Spannung und I der gemessene Ionenstrom waren.

d hatte die Größe von 2 nm, während der Öffnungswinkel ungefähr 12 Grad betrug.

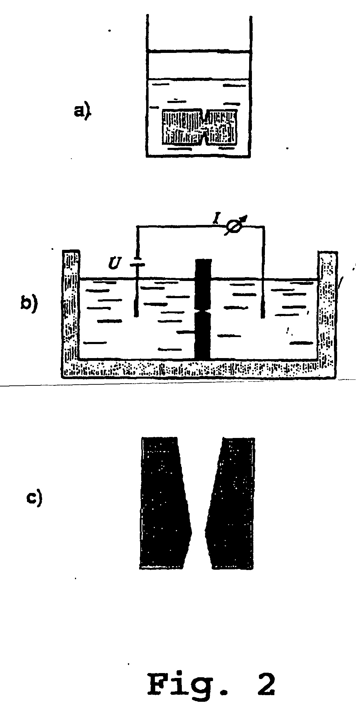

Der Vorgang des asymmetrischen Ätzens kann auch zur Erzeugung von Poren mit Doppelkonus verwendet werden, wie in Fig. 2 veranschaulicht ist. Fig. 2 a) zeigt das Vorätzen der Polymerfolie von beiden Seiten her (für Kapton® wurde NaOCl als Ätzmittel verwendet). Dies führt zur Bildung von zwei kleinen Konen. Fig. 2 b) veranschaulicht den Fortgang des asymmetrischen Ätzens, wobei sich in der linken Zellenhälfte das Ätzmittel und in der rechten Zellenhälfte das Stoppmittel befand. Das einseitige, daher asymmetrische Ätzen führt zur Vergrößerung des einen Konus, während der andere Konus durch das Stoppmittel geschützt ist. Die erhaltene Pore ist in Fig. 2 c) schematisch veranschaulicht.

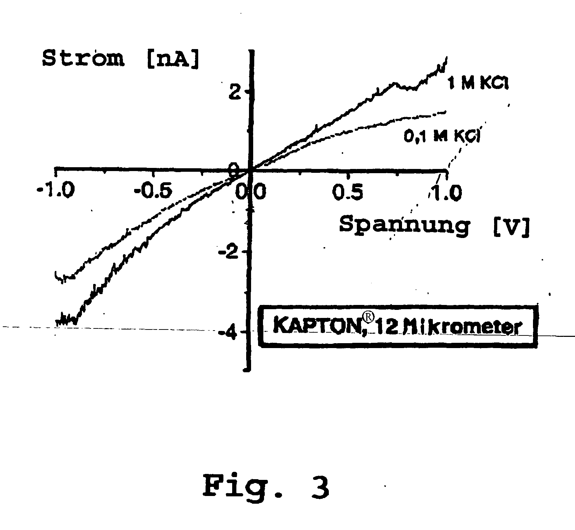

Fig. 3 veranschaulicht die Strom-Spannungskennlinie einer Kapton®-Membran mit einer einzigen konischen Pore in einer symmetrischen pH- und Konzentrationsumgebung. Der pH-Wert wurde auf beiden Seiten der Membran auf 7 gehalten. Der elektrische Strom hängt von der Polarität der angelegten Spannung ab. Für denselben Absolutwert der Spannung werden unterschiedliche elektrische Ströme erhalten. Die Daten wurden für 1 und 0,1 M KCl auf beiden Seiten der Membran erhalten.

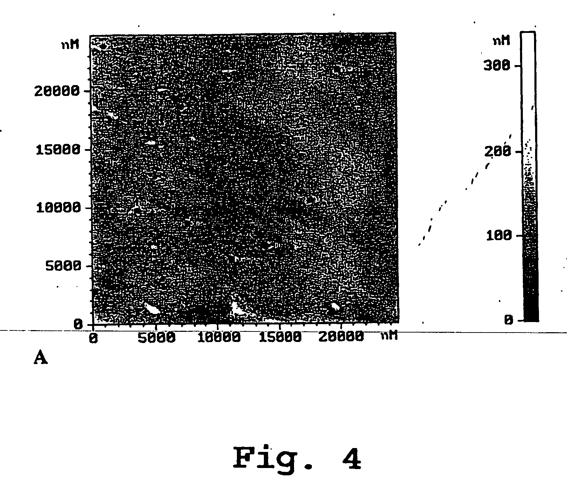

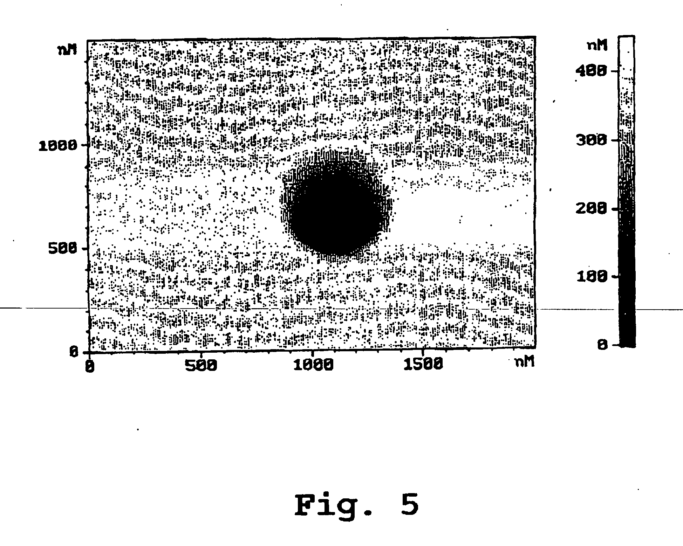

Fig. 4 veranschaulicht die Glattheit der Probe, nachdem das Ätzen durch AFM-Untersuchungen der Kapton®-Folie, ausgeführt in Wasser, bestätigt wurden. Es ist die geätzte Seite gezeigt (A). In Fig. 5 ist die vergrößerte eine Pore (B) gezeigt. Die geätzte Kaptonfolie ist unter Wasser abgebildet und wurde mit Xe-Ionen ($10^4$ Ionen/cm$^3$, 11,4 MeV/Nukleon) bestrahlt und von einer Seite her bei 50°C geätzt.

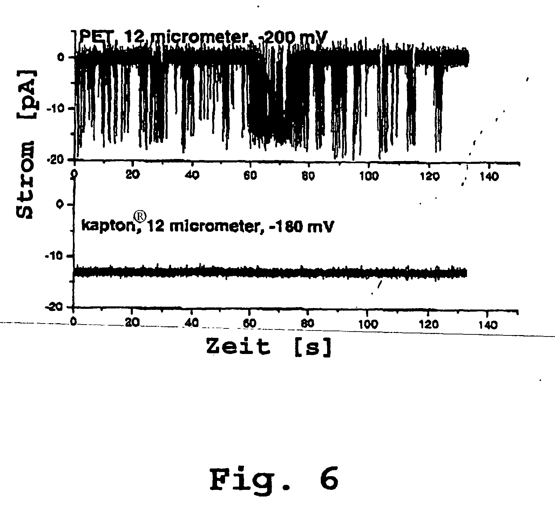

Die Glattheit der Wände führt zu einem "sauberen" aufgezeichneten Ionenstromsignal, das in Fig. 6 veranschaulicht ist. In Fig. 6 wird der Ionenstrom für eine asymmetrische Nanopore in PET und Kapton verglichen (0,1 M KCl, pH 7).

Die ausgeführten Experimente zeigen die überlegenen Eigenschaften der Ionenstrom-Kennlinie der Kapton®-Folie gegenüber Polyesterfolien. Asymmetrische Nanoporen in Kapton® richten den Strom gleich und stellen ein stabiles Ionenstromsignal sicher.

Wie sich aus Obigem ergibt, zeigt eine Pore einer erfindungsgemäßen Membran eine geometrische Asymmetrie mit einer sehr scharfen Konusspitze im Nanometerbereich. Der Ionentransport durch die Membran führt zu einem stabilen Signal und insbesondere ist der Ionenstrom durch die Poren durch ein asymmetrisches Strom-Spannungskennlinie gekennzeichnet. Die Poren sprechen rasch auf externe Stimuli, z.B. Spannung, an.

Insbesondere mögliche Anwendungsgebiete der erfindungsgemäßen Membran sind spezielle Filtrationsprozeße, rasche Steuerprozeße mit Zeitkonstanten in der Größe von Sekundenbruchteilen, Spannungssteuerungsnanosysteme, die stabile Signale erzeugen. Derartige und auch weitere Anwendungen finden sich beispielsweise im Bereich der medizinischen Industrie, Pharmakologie und auf dem Gebiet des Umweltschutzes.

**Patentansprüche**

1.  Verfahren zur Herstellung von Nanostrukturen in Membranen, bei dem

    eine Membran aus einem Polymermaterial mit geladenen Teilchen, insbesondere Ionen, zur Erzeugung von Teilchenspuren bestrahlt wird,
    die Teilchenspuren der Membran unter Verwendung einer Ätzflüssigkeit geätzt werden,
    der Ätzvorgang nach dem Erreichen des Durchbruchzeitpunktes unter Verwendung einer Stoppflüssigkeit sofort gestoppt wird,
    derart, dass als Nanostrukturen stark asymmetrische Poren mit glatten Wänden und sehr scharfen Konuspitzen gebildet werden,

**dadurch gekennzeichnet, dass**
als Membranmaterial Polyimid verwendet wird.

**2.** Verfahren nach Anspruch 1, **dadurch gekennzeichnet, dass** als Polyimid Kapton® verwendet wird.

**3.** Verfahren nach Anspruch 1 oder 2, **dadurch gekennzeichnet, dass** als Ätzflüssigkeit NaOCl-Lösung verwendet wird.

**4.** Verfahren nach einem der Ansprüche 1 bis 3, **dadurch gekennzeichnet, dass** als Stoppflüssigkeit ein Reduziermittel wie eine Lösung vom Redox-Typ mit KI, $NO_2^-$, $S_2O_3^{2-}$ oder $Mn^{2+}$ verwendet wird.

**5.** Membran mit stark asymmetrischen Nanoporen mit glatten Wänden und sehr scharfen Konusspitzen bestehend aus Polyimid und hergestellt nach dem Verfahren nach einem der Ansprüche 1 bis 4.

**Claims**

**1.** Method of producing nanostructures in membranes, in which

a membrane consisting of a polymer material is irradiated with charged particles, especially ions, to produce particle tracks,
the particle tracks of the membrane are etched using an etching liquid,
the etching operation is immediately stopped using a stop liquid, after the point in time at which breakthrough occurs has been reached,
in such a manner that markedly asymmetrical pores with smooth walls and very sharp conical apices are formed as nanostructures,

**characterised in that** polyimide is used as the membrane material.

**2.** Method according to claim 1, **characterised in that** the polyimide used is Kapton®.

**3.** Method according to claim 1 or 2, **characterised in that** the etching liquid used is NaOCl solution.

**4.** Method according to any one of claims 1 to 3, **characterised in that** the stop liquid used is a reducing agent, such as a solution of the redox type with KI, $NO_2^-$, $S_2O_3^{2-}$ or $Mn^{2+}$.

**5.** Membrane having markedly asymmetrical pores with smooth walls and very sharp conical apices, consisting of polyimide and produced in accordance with the method according to any one of claims 1 to 4.

**Revendications**

**1.** Procédé de réalisation de nanostructures dans des membranes, dans lequel

une membrane en matériau polymère est bombardée avec des particules chargées, en particulier des ions, afin de produire des traces de particules,
les traces de particules de la membrane sont gravées en utilisant un liquide de gravure,
l'opération de gravure est stoppée juste après le moment où le point de percée a été atteint en utilisant un liquide d'arrêt,
de manière à former en tant que nanostructures des pores fortement asymétriques présentant des parois lisses et des pointes coniques très pointues,

**caractérisé en ce que** le matériau de membrane utilisé est du polyimide.

**2.** Procédé selon la revendication 1, **caractérisé en ce que** le polyimide utilisé est le kapton.

**3.** Procédé selon la revendication 1 ou la revendication 2, **caractérisé en ce que** le liquide de gravure utilisé est une solution de NaOCl.

4. Procédé selon l'une des revendications 1 à 3, **caractérisé en ce que** le liquide d'arrêt utilisé est un agent réducteur tel qu'une solution de type oxydoréducteur avec du KI, du $NO_2^-$, du $S_2O_3^{2-}$ ou du $Mn^{2+}$.

5. Membrane à nanopores fortement asymétriques présentant des parois lisses et des pointes coniques très pointues, composée de polyimide et fabriquée par le procédé selon l'une des revendications 1 à 4.

Fig. 1

a)

b)

c)

Fig. 2

Fig. 3

A

# Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4210486 C1

**In der Beschreibung aufgeführte Nicht-Patentliteratur**

- **P. APEL ; Y.E. KORCHEV ; Z. SIWY ; R. SPOHR ; M. YOSHIDA.** Diode-like single-ion track membrane prepared by electro-stopping. *Nucl. Instrum. Meth. B,* 2001, vol. 184, 337
- **SCHMIDT-ROHR, K. ; HU, W. ; ZUMDULYADIS, N.** Elucidation of the Chain Conformation in a Glassy Polyester, PET, by Two-Dimensional NMR. *Science,* 1998, vol. 280, 714-717
- **D. BAUR ; Y. KORCHEV ; C. MÜLLER ; Z. SIWY ; H. SPOHR ; R. SPOHR.** Surface gel in ion track etching - Observation and consequences. *GSI Jahresbericht,* 2001
- **TRAUTMANN, C. ; BRUECHLE, W. ; SPOHR, R. ; VETTER J. ; ANGERT, N.** Pore geometry of etched ion tracks in polyimide. *Nucl. Instrum. Meth. B,* 1996, vol. 111, 70-74